# EUROPÄISCHE PATENTSCHRIFT

(11) **EP 2 062 634 B1**
(45) Veröffentlichungstag und Bekanntmachung des Hinweises auf die Patenterteilung: **10.04.2013**
(21) Anmeldenummer: 09154890.9
(22) Anmeldetag: 21.07.2006
(51) Int. Cl.: B01D 36/00

(54) **Kraftstofffilter**
Fuel filter
Filtre à carburant

(30) Priorität: 22.07.2005 DE 102005035003; 12.09.2005 DE 202005014451 U
(43) Veröffentlichungstag der Anmeldung: 27.05.2009
(62) Teilanmeldung aus: 06764247.0
(73) Patentinhaber: MANN+HUMMEL GmbH, 71638 Ludwigsburg (DE)
(72) Erfinder: Kiedaisch, Steffi, 4790, Lillesand (NO); Straßenberger, Norbert, 84166, Adlkofen (DE); Sturgess, Christopher Marc, 70825, Korntal (DE); Klinser, Andreas, 71638, Ludwigsburg (DE); Schmid, Thorsten, 70374 Stuttgart (DE); Franz, Andreas, 71638, Ludwigsburg (DE); Findeisen, Dr. Holger, 71672, Marbach (DE); Micke, Michael, 589473, Singapore (SG); Steuss, Andreas, 38640, Goslar (DE)

(56) Entgegenhaltungen:
- WO-A-00/47310
- DE-C1- 19 835 525

## Beschreibung

### Technisches Gebiet

Die Erfindung betrifft ein Filterelement in einem Kraftstofffilter, insbesondere für den Betrieb von Brennkraftmaschinen von Fahrzeugen.

### Stand der Technik

Es sind Kraftstofffilter zur Reinigung von Kraftstoffen bekannt, welche im Druck- oder Saugbetrieb arbeiten. Durch Kraftstofffilter werden Verunreinigungen, welche im Kraftstoff enthalten sind, daran gehindert, zu der Brennkraftmaschine zu gelangen. In dem Kraftstoff ist fein verteilte bzw. gelöste Luft enthalten. Beim Betreiben des Kraftstofffilters im Saugbetrieb kommt es zum Ausgasen der Luft. Diese Luft sammelt sich im Kraftstofffilter auf der Rohseite. Da die Luft nicht durch das Filtermedium des Kraftstofffilters hindurch gelangt, sinkt der Flüssigkeitsspiegel in dem Kraftstofffilter, wodurch die effektiv zur Verfugung stehende Filterfläche erheblich reduziert ist. Außerdem bedeutet das Absinken des Flüssigkeitsspiegels, dass nur ein Teil der Filterfläche für die Filtration und Wasserabscheidung genutzt wird und nicht das gesamte Filterelement. Für die Wasserabscheidung wird jedoch eine vom Volumenstrom abhängige, bestimmte Filterfläche benötigt. Wird diese durch den sinkenden Flüssigkeitsspiegel unterschritten, so verschlechtert sich die Wasserabscheidung auf ein unzureichendes Niveau. Des Weiteren steigt gleichzeitig die Strömungsgeschwindigkeit im Filtermedium, was nachteilig für den Filtrationsprozess ist. Gleichzeitig steigt der Differenzdruck zwischen Roh- und Reinseite.

Zur Vermeidung der Luftansammlung auf der Rohseite wurden verschiedene Einrichtungen, wie z.B. Luftbohrungen oder Strömungsquerschnitte verwendet. Allerdings besteht, insbesondere bei Öffnungen für die Luft der Nachteil, dass auch verschmutzter Kraftstoff auf die Reinseite gelangt.

Dokument WO 00/47310 A1 zeigt einen Filteraufsatz zur Wasserfiltration wässriger Medien, wobei eine zentrale Öffnung der oberen Endkappe von einer hydrophoben Membran abgeschlossen ist.

Aufgabe der Erfindung ist es daher, einen Kraftstofffilter zu schaffen, welcher im Saugbetrieb betrieben werden kann, ohne dass die Filterfläche durch die ausgasende Luft reduziert wird. Weiterhin ist zu verhindern, dass ungereinigter Kraftstoff auf die Reinseite des Filtermediums gelangt und so den Kraftstoff verunreinigt. Weiterhin soll der Kraftstofffilter einfach und kostengünstig herstellbar sein.

Diese Aufgabe wird durch den Kraftstofffilter gemäß Anspruch 1 gelöst.

### Offenbarung der Erfindung

Der erfindungsgemäße Kraftstofffilter dient der Reinigung von Kraftstoff, wie z.B. Diesel. Hierbei sind Verunreinigungen aus dem Kraftstoff entfernbar, wodurch diese einen nachfolgenden Verbraucher nicht beschädigen können. Vorzugsweise ist der Kraftstofffilter zur Reinigung von Kraftstoffen für Brennkraftmaschinen von Fahrzeugen vorgesehen, insbesondere wenn eine Wasserabscheidung gefordert ist. Der Kraftstofffilter verfügt über ein Gehäuse und ein in dem Gehäuse angeordnetes Filterelement. Das Gehäuse verfügt zumindest über einen Einlass und einen Auslass. Durch den Einlass strömt der zu reinigende Kraftstoff in das Gehäuse ein und durch den Auslass strömt der gereinigte Kraftstoff aus dem Gehäuse heraus. Das Gehäuse kann aus Metall und/oder Kunststoff bestehen.

Sofern das Filterelement in dem Gehäuse austauschbar sein soll, muss das Gehäuse öffenbar sein. Hierbei ist es sinnvoll, wenn das Gehäuse über einen Behälter und einen Deckel verfügt. Das Filterelement ist derart in dem Gehäuse angeordnet, dass ein Reinbereich dichtend von einem Rohbereich getrennt ist. Der Rohbereich ist kommunizierend mit dem Einlass und der Reinbereich kommunizierend mit dem Auslass verbunden. Zwischen dem Rohbereich und dem Reinbereich ist mindestens ein Strömungskanal vorgesehen, wobei der Strömungskanal an einem geodätisch oberen Bereich in dem Kraftstofffilter angeordnet ist. Anstelle eines einzigen Strömungskanals können auch mehrere Strömungskanäle vorgesehen sein. Hierbei ist der Strömungskanal an dem Filterelement angeordnet. Das Filterelement verfügt vorzugsweise über ein gefaltetes und ringförmig geschlossenes Filtermedium, welches mit Endscheiben stirnseitig abgedichtet ist. Bei einer Anordnung des Strömungskanals an dem Filterelement ist dieser an der oberen Endscheibe angeordnet. Durch den Strömungskanal können bei einem entsprechenden Differenzdruck Gase von der Rohseite auf die Reinseite geleitet werden. Der Strömungskanal ist von einer Wand umgeben, wobei die Wand Teil des Gehäuses oder Filterelementes sein kann. Mit dieser Wand korrespondiert ein poröser, für Gase und Kraftstoff durchlässiger Filterkörper dichtend, wobei der Filterkörper für Verunreinigungen undurchlässig st. Der Filterkörper kann sowohl als dreidimensionaler poröser Körper als auch als flaches oder gefaltetes Filterpapier oder Filtervlies ausgebildet sein.

Der Filterkörper kann z.B. mit der Wand verklebt, verschweißt oder von der Wand umspritzt sein. Hierbei deckt der Filterkörper den Strömungskanal vollständig ab. Die Poren des Filterkörpers sind derart ausgestaltet, dass Gase, welche sich im oberen Bereich des Gehäuses sammeln, ab einem definierten Differenzdruck durch den Filterkörper hindurch strömen können. Beim Durchströmen der Gase durch den Filterkörper können die großen Gasblasen in sehr kleine Bläschen zerkleinert werden. Alternativ können die Gasblasen auch durch eine Blende oder eine besonders ausgeformte Kante, an der die Gasblasen entlang streichen, aufgesplittet und in kleine Bläschen verteilt werden. Diese kleinen Bläschen können dann dem gereinigten Kraftstoff beigemengt werden, ohne dass dies den Verbrennungsprozess negativ beeinflusst. Falls keine Gase in dem Gehäuse enthalten sind und der Kraftstoff in Kontakt mit dem Filterkörper kommt, wird der Kraftstoff, welcher durch den Strömungskanal hindurchströmt, durch den Filterkörper gereinigt. Somit gelangen keine Verunreinigungen von dem Rohbereich auf den Reinbereich.

Damit die Gase durch den Filterkörper hindurch treten, ist vorzugsweise ein höherer Differenzdruck als für den Durchtritt des Kraftstoffs durch das Filtermedium erforderlich. Dieser Differenzdruck wird durch das Absinken des Flüssigkeitsspiegels in dem Kraftstofffilter und die dadurch reduzierte, zur Verfügung stehende Filterfläche erzeugt.

Bei einer weiteren Ausgestaltung der Erfindung ist eine Dichtung vorgesehen, welche bewirkt, dass Leckagen zwischen dem Filterkörper und der Wand verhindert werden. Hierbei kann die Dichtung aus einem Elastomer bestehen, welches beständig gegenüber dem Kraftstoff ist. Beispielsweise kann die Dichtung aus NBR oder FPM bestehen. Die Beständigkeit ist insbesondere gegenüber Diesel, Biodiesel und Ethanol erforderlich, damit die Dichtung nicht beschädigt wird und es dadurch zu Leckagen kommt. Durch die Verwendung einer elastischen Dichtung erhält man zusätzlich zu der Abdichtung zwischen der Wand und dem Filterkörper noch einen axialen Toleranzausgleich, wodurch Leckagen aufgrund von Fertigungstoleranzen verhindert werden.

Es ist vorteilhaft, wenn ein Käfig vorgesehen ist, in welchem der poröse Filterkörper zumindest teilweise angeordnet ist. Hierbei kann der Filterkörper zur Vormontage in den Käfig eingebracht werden. Somit kann der Filterkörper einfach in bzw. an dem Gehäuse befestigt werden. Der Käfig ist für die auszutragenden Gase bzw. den Kraftstoff durchlässig, somit ist der Filterkörper von allen Seiten anströmbar. Dies ist vorteilhaft, da so die effektive, durchströmbare Oberfläche des Filterkörpers besonders groß ist.

Bei einer besonderen Ausgestaltung der Erfindung verfügt der Käfig über Stege, wobei die Stege derart ausgestaltet sind, dass der Filterkörper mit einer Übermaßpassung gehalten ist. Somit wird die Montage des Filterkörpers in dem Gehäuse wesentlich vereinfacht. Bei einer Weiterbildung ist auch die Dichtung mit einer Übermaßpassung in dem Käfig gehalten, wodurch die komplett vormontierte Einheit aus dem Filterkörper, dem Käfig und der Dichtung mit einem Montagevorgang in dem Gehäuse fixiert werden kann.

Es ist besonders vorteilhaft, wenn der Käfig über Schnapphaken verfügt, mit welchen der Käfig an der Wand fixierbar ist. Somit wird die vormontierte Einheit nur auf die Wand aufgesetzt und mit einem leichten Druck montiert. Zur vereinfachten Montage können die Schnapphaken und/oder die Wand über Einführungsschrägen verfügen, mit welchen die Montage vereinfacht wird.

Gemäß einer Weiterbildung der Erfindung besteht der Käfig aus einem thermoplastischen Kunststoff, welcher im Kunststoffspritzgussverfahren herstellbar ist. Somit ist der Käfig einfach und kostengünstig herstellbar, wobei auch komplizierte Geometrien verwirklicht werden können.

Bei einer besonderen Ausgestaltung besteht der Filterkörper aus einem gesinterten Material, insbesondere aus Keramik. Durch die Materialauswahl bzw. Verarbeitung sind die Poren des Filterkörpers in ihren Eigenschaften beeinflussbar. Hierbei ist es vorteilhaft, wenn die Poren im Bereich von ca. 50 bis 150 µm, insbesondere 80 µm liegen, da in diesem Bereich ein optimaler Gasdurchtritt gewährleistet wird und die Verunreinigengen aus dem Kraftstoff nicht in den Reinbereich gelangen.

Der keramische Filterkörper kann in seiner Porengröße, Porosität und Zellengeometrie auf die jeweiligen Anforderungen angepasst werden.

Hierbei kann der Filterkörper durch einen offen- oder geschlossenporigen Schaum ausgebildet sein. Um den Filterkörper zu bilden, kann ein Vorkörper aus einem Schaummaterial verwendet werden, der auf die erforderlichen Geometrien bearbeitet wurde. Mögliche Schaummaterialien sind z.B. vernetzte Polyethylene, PUR-Ether, Kaltschäume aus HR oder CMHR, PUR-Ester, Prepolymerschaum, Moosgummi, Latex-Schaum, Melaminharz-Schaum, Viskoseschaum, PVC-Schaum, Copolymerschaum, PANA-Elasturan, Polypropylen-Schaum, Naturkautschuk, Chloropren-Kautschuk, Ethylen-Propylen-Dien-Kautschuk, Nitril-Butadien-Rubber oder StyrolButadien-Kautschuk. Hierzu können beliebige Verfahren, wie z.B. Sägen, Thermoformen, Wasserstrahl- oder Laserschneiden verwendet werden. Der geformte Vorkörper wird mit einer geeigneten Suspension anorganisch sinterbarer Partikel durch z.B. Übergießen oder Tauchen infiltriert. Anschließend wird die Form an der Luft oder unter definierten Bedingungen bezüglich Temperatur und Luftfeuchte getrocknet. Nach dem Trocknen wird der Filterkörper gesintert, wobei die Poren gebildet werden.

Bei einer weiteren Ausgestaltung der Erfindung ist der Filterkörper zylindrisch ausgebildet, wobei eine Stirnseite über dem Durchströmungskanal angeordnet ist. Die Umfangsfläche und die andere Stirnseite stehen mit dem Rohbereich in Kontakt, wodurch der Filterkörper axial und radial anströmbar ist.

### Kurze Beschreibung der Zeichnungen

Weitere Einzelheiten werden nachfolgend anhand der Figuren beschrieben. Hierbei zeigt

Figur 1 einen Kraftstofffilter im Schnitt,

Figur 2 einen Entlüftungseinheit in Explosionsdarstellung,

Figur 2A einen Ausschnitt aus dem Filterkörper gemäß Figur 2,

Figur 3 die Entlüftungseinheit gemäß Figur 2 im vormontierten Zustand,

Figur 4 einen Ausschnitt aus dem Kraftstofffilter gemäß Figur 1,

Figur 5 die schematische Darstellung eines Ausschnittes aus einem Kraftstofffilter, und

Figur 6 eine Draufsicht auf die Endscheibe des Kraftstofffilters gemäß Figur 5.

### Ausführungsform(en)

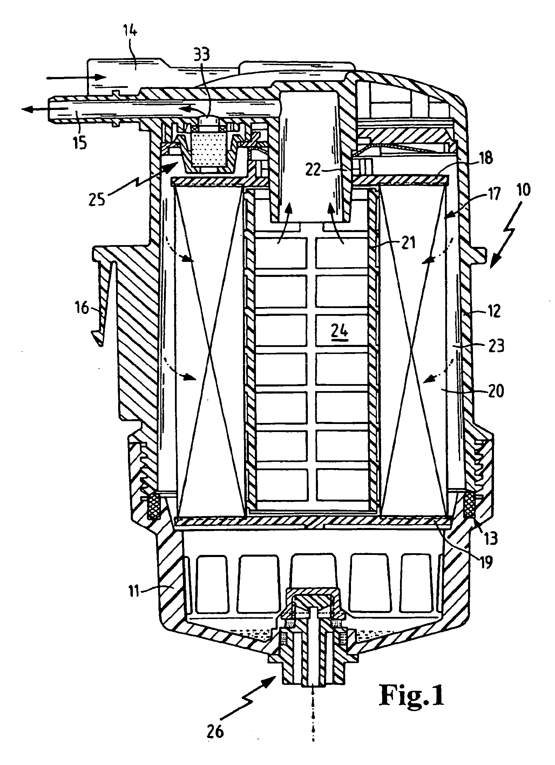

In Figur 1 ist ein Flüssigkeitsfilter im Schnitt dargestellt. Der Flüssigkeitsfilter verfügt über ein zweiteiliges Gehäuse 10, welches aus Kunststoff besteht. Das Gehäuse 10 wird durch einen Gehäusedeckel 11 und einen Gehäusetopf 12 gebildet, wobei der Gehäusedeckel 11 dichtend mit dem Gehäusetopf 12 verschraubt ist. Hierzu ist eine Dichtung 13 im Bereich der Verschraubung vorgesehen. Der Gehäusetopf 12 ist derart ausgebildet, dass ein Kraftstoffeinlass 14 und ein Kraftstoffauslass 15 einstückig angeformt sind. Weiterhin ist an dem Gehäusetopf 12 ein Befestigungsclip 16 angeordnet, mit welchem das Gehäuse 10 z.B. im Motorraum eines Fahrzeuges befestigt werden kann. Innerhalb des Gehäuses 10 ist ein Filterelement 17 angeordnet, welches über eine obere Endscheibe 18 und eine untere Endscheibe 19 verfügt. Zwischen den Endscheiben 18, 19 erstreckt sich ein zick-zack-förmig gefaltetes Filtermedium 20. Das Filtermedium 20 ist ringförmig geschlossen, wobei innerhalb des geschlossenen Filtermediums 20 ein Stützkörper 21 angeordnet ist. Der Stützkörper 21 verhindert, dass das Filtermedium 20 bei großen Drücken bzw. hohen Durchflussraten deformiert bzw. beschädigt wird. Mit seiner oberen Endscheibe 18 ist das Filterelement 17 dichtend auf einen Auslassdom 22 aufgesteckt. Der Auslassdom 22 ist mit dem Kraftstoffauslass 15 kommunizierend verbunden, wobei der Auslassdom 22 ebenfalls einstückig mit dem Gehäusetopf 12 verbunden ist. Durch das Filterelement 17 wird in dem Gehäuse 10 ein Rohbereich 23 dichtend von einem Reinbereich 24 getrennt. Der Rohbereich 23 ist zwischen dem Filterelement 17 und dem Gehäuse 10 gebildet. Der Reinbereich 24 ist innerhalb des Filterelementes 17 angeordnet.

Im geodätisch oberen Bereich des Gehäusetopfes 12 ist eine Entlüftungseinheit 25 angeordnet, welche anhand der nachfolgenden Figuren ausführlich beschrieben wird. Im geodätisch unteren Bereich des Gehäuses 10, welcher durch den Gehäusedeckel 11 gebildet ist, ist ein Wasserauslass 26 angeordnet. Der zu reinigende Kraftstoff strömt durch den Kraftstoffeinlass 14 in den Rohbereich 23 des Gehäuses 10 ein. Beim Durchströmen des Filtermediums 20 scheidet sich das im Kraftstoff enthaltene Wasser ab und sinkt in den unteren Bereich des Gehäuses 10 ab. Dort sammelt sich das Wasser oberhalb des Wasserauslasses 26. Der gereinigte Kraftstoff tritt durch das Filtermedium 20 hindurch in den Reinbereich 24, von wo aus der Kraftstoff zu dem Kraftstoffauslass 15 gelangt und den Kraftstofffilter verlässt.

Beim Betreiben des Kraftstofffilters im Saugbetrieb findet eine Ausgasung der im Kraftstoff gelösten Gase statt. Diese Gase sammeln sich im oberen Bereich des Gehäuses 10 und bilden eine Gasblase. Damit die Gasblase im Laufe der Zeit nicht das gesamte Innenvolumen des Gehäuses 10 ausfüllt, ist die Entlüftungseinheit 25 im oberen Bereich vorgesehen. Durch diese Entlüftungseinheit 25 treten die Gase hindurch und werden dem gereinigten Kraftstoff wieder beigemengt. Hierbei werden die Gase in extrem kleine Luftbläschen zerkleinert, so dass diese den nachfolgenden Verbrennungsprozess nicht negativ beeinflussen können.

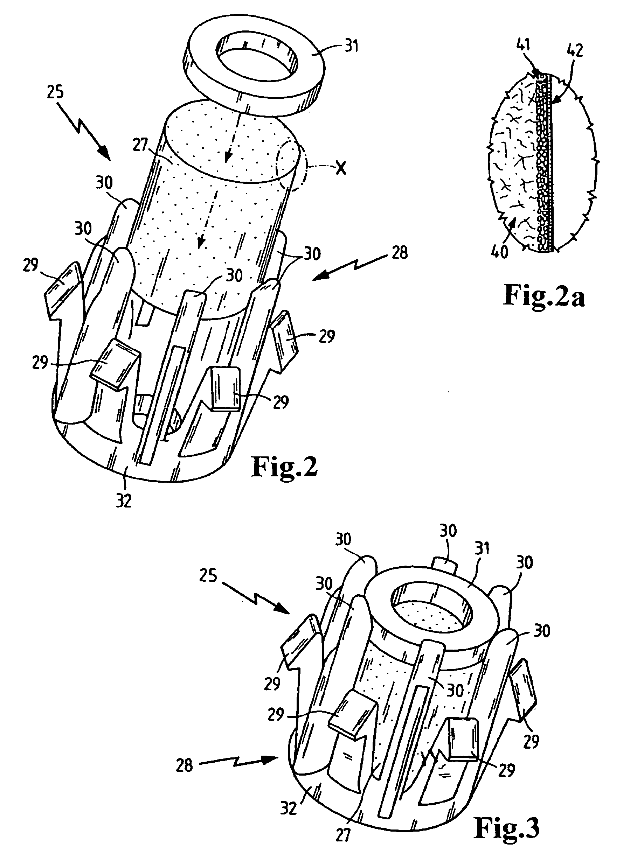

In Figur 2 ist die Entlüftungseinheit 25 in Explosionsdarstellung gezeigt. Die Entlüftungseinheit 25 verfügt über einen porösen, zylinderförmigen Filterkörper 27, welcher aus gesinterter Keramik besteht. Die Poren des Filterkörpers 27 sind derart ausgelegt, dass die Gase hindurchströmen können und fein verteilt werden. Außerdem können im Kraftstoff enthaltene Schmutzpartikel nicht von dem Rohbereich 23 auf den Reinbereich 24 gelangen. Der Filterkörper 27 wird in einen Käfig 28 eingelegt, mit welchem der Filterkörper 27 in dem Gehäuse 10 (gemäß Figur 1) fixiert werden kann. Hierzu verfügt der Käfig 28 über Schnapphaken 29, welche am Umfang verteilt angeordnet sind. Weiterhin verfügt der Käfig 28 über Fixierstege 30, welche sich in axialer Richtung erstrecken und den Filterkörper 27 aufnehmen. Hierbei ist das durch die Fixierstege 30 gebildete Innenvolumen etwas kleiner als die Außenkontur des Filterkörpers 27, wodurch der Filterkörper 27 mit einer Übermaßpassung in dem Käfig 28 gehalten wird. Die Schnapphaken 29 und Fixierstege 30 erstrecken sich in axialer Richtung von einem Kreisringsegment 32, welches in seinem Mittenbereich für das Gas durchlässig ist.

Die Entlüftungseinheit 25 verfügt weiterhin über eine kreisringförmige Dichtung 31, welche aus einem kraftstoffbeständigen Elastomer gebildet ist. Die Dichtung 31 verfügt über einen Außendurchmesser, welcher im Wesentlichen dem Durchmesser des Filterkörpers 27 entspricht. In Figur 2A ist ein vergrößerter Ausschnitt aus dem Filterkörper 27 dargestellt. Der Filterkörper verfügt über eine Trägerstruktur 40, welche aus einem keramisierten oder metallisierten Schaum besteht. Dieser Schaum ist zur Glättung der Oberfläche bzw. zur Verkleinerung der Poren mit einem porös infiltrierten Bereich 41 versehen. Auf diesen Bereich 41 ist als oberstes eine funktionelle Schicht bzw. Trennschicht 42 aufgebracht.

In Figur 3 ist die Entlüftungseinheit 25 gemäß Figur 2 im vormontierten Zustand dargestellt. Der Figur 2 entsprechende Bauteile sind mit gleichen Bezugszeichen versehen. Die Entlüftungseinheit kann einerseits einfach vormontiert und andererseits einfach in das Gehäuse montiert werden.

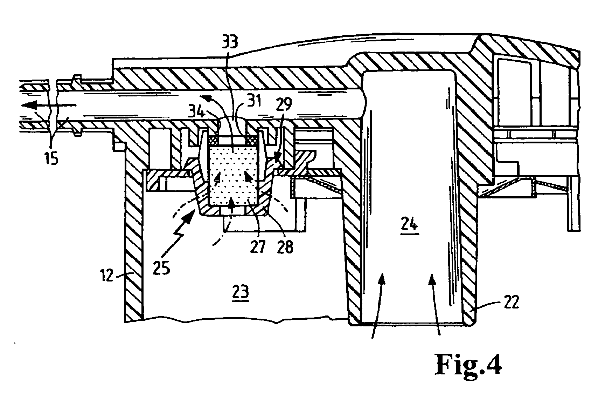

In Figur 4 ist ein Ausschnitt aus dem Kraftstofffilter gemäß Figur 1 im Schnitt dargestellt. Der Figur 1 bzw. 2 entsprechende Bauteile sind mit gleichen Bezugszeichen versehen. Die Entlüftungseinheit 25 ist mit den Schnapphaken 29 an dem Gehäuse 12 fixiert. Zwischen dem Rohbereich 23 und dem Kraftstoffauslass 15 ist ein Strömungskanal 33 angeordnet, welcher von dem Filterkörper 27 überdeckt ist. Der Strömungskanal 33 ist von einem Dichtansatz 34 umgeben, auf welchem die Dichtung 31 aufliegt und so einen Leckagestrom zwischen dem Filterkörper 27 und dem Gehäuse 10 verhindert. Weiterhin dient die Dichtung 31 als axialer Toleranzausgleich, so dass eine Montage der Schnapphaken 29 ermöglicht wird, ohne dass diese anschließend zuviel Spiel haben.

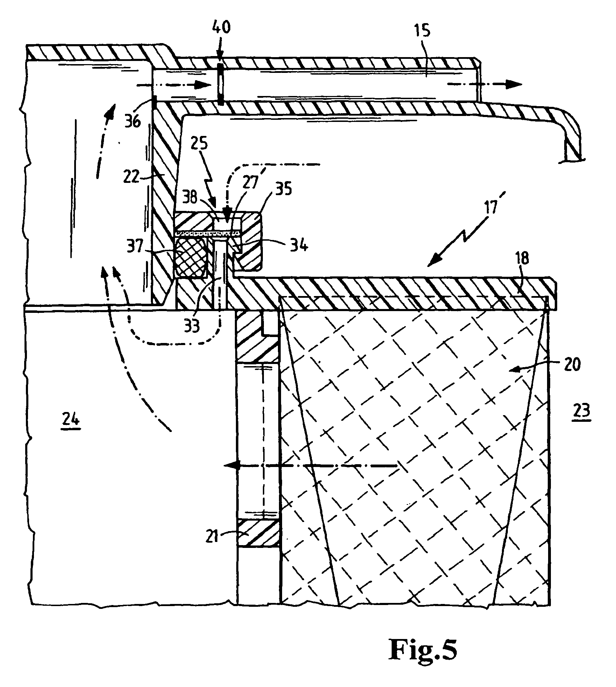

In Figur 5 ist ein Ausschnitt aus einem ausgestalteten Kraftstofffilter gemäß der Erfindung dargestellt. Bauteile, welche den vorangehenden Figuren entsprechen, sind mit gleichen Bezugszeichen versehen. Der Kraftstofffilter verfügt über ein Filterelement 17', das aus einem zick-zack-förmig gefalteten Filtermedium 20 besteht und konzentrisch um einen Auslassdom 22 angeordnet ist. Das Filtermedium 20 ist mit einer Endscheibe 18 stirnseitig abgedichtet. Der Kraftstoff strömt in Pfeilrichtung von dem Rohbereich 23 durch das Filtermedium 20 hindurch auf den Reinbereich 24, von wo aus der Kraftstoff durch den Auslassdorn 22 dem Kraftstoffauslass 15 zugeführt wird. Oberhalb des Filterelementes befindet sich ebenfalls Kraftstoff, der ungereinigt ist, und eventuell vorhandene, aus dem Kraftstoff diffundierte Luft. Diese Luft bzw. Gase sammeln sich in dem geodätisch oberen Bereich, oberhalb der Endscheibe 18, in dem Kraftstofffilter. Um diese Gase in den Reinbereich 24 zu leiten, verfügt die Endscheibe 18 über einen oder mehrere Strömungskanäle 33. Diese Strömungskanäle 33 sind mit einem Filterkörper 27' abgedeckt, wobei der Filterkörper 27' als Filterpapierring ausgestaltet ist. Alternativ kann der Filterkörper 27' selbstverständlich auch aus anderen Medien wie z.B. einem keramischen Filterschaum bestehen. Der Filterpapierring verfügt bei diesem Ausführungsbeispiel über die gleichen Eigenschaften wie das Filtermedium 20 und besteht vorzugsweise aus dem gleichen Material.

Zur Fixierung des Filterpapierrings über den Strömungskanälen 33 ist ein Haltering 35 vorgesehen. Der Haltering 35 ist ähnlich einer Überwurfmutter ausgestaltet und derart fest mit der Endscheibe 18 verbunden, dass ein Verrutschen des Filterpapierrings 27' verhindert wird. Bei anderen Ausgestaltungen kann der Haltering 35 auch mit der Endscheibe 18 verschnappt, verklebt oder verschweißt sein, wodurch eine einfache Montage möglich ist. Weiterhin dient der Haltering 35 der Positionierung der Dichtung 37, welche zur Abdichtung des Filterelementes 17' auf dem Auslassdom 22 vorgesehen ist. Hierbei ist die Dichtung 37 an drei Seiten zwischen der Endscheibe 18, deren angeformten Strömungskanal 33 und dem Haltering 35 gekammert. Der Filterpapierring 27' ist sowohl luft- als auch flüssigkeitsdurchlässig. Dies bedeutet, dass ein geringer Flüssigkeitsstrom in strichpunktierter Pfeilrichtung durch den Strömungskanal 33 der Endscheibe 18 geleitet wird. Gleichzeitig wird aber auch Luft, die sich auf der Rohflüssigkeitsseite befindet, durch den Strömungskanal 33 hindurchgeleitet und kann in dem Reinbereich 24 über den Kraftstoffauslass 15 mit abströmen. Somit wird eine kontinuierliche Abführung der Gase aus dem Kraftstofffilter ermöglicht. Da der Filterkörper 27' direkt an dem Filterelement 17' angeordnet ist, wird dieser bei jedem Filterelementwechsel ebenfalls ausgetauscht, wodurch ein Zusetzen der Poren durch einen zu langen Einsatz in dem Kraftstofffilter verhindert wird. Die zur Entgasung erforderlichen Dimensionen können somit reduziert werden, da keine Reserven für die allmähliche Verblockung der Poren vorgesehen werden müssen. Sofern die Luft auf dem Reinbereich 24 größere Blasen bildet, ist es sinnvoll, diese Blasen zu zerteilen. Diese Zerteilung erfolgt durch eine Kante 36, welche in dem Kraftstoffauslass 15 angeordnet ist. Die Luftblasen streichen an dieser Kante entlang und werden dadurch aufgesplittet. Alternativ oder zusätzlich zu der Kante 36 kann auch eine Blende 40 verwendet werden, welche in dem Kraftstoffauslass 15 angeordnet sein kann.

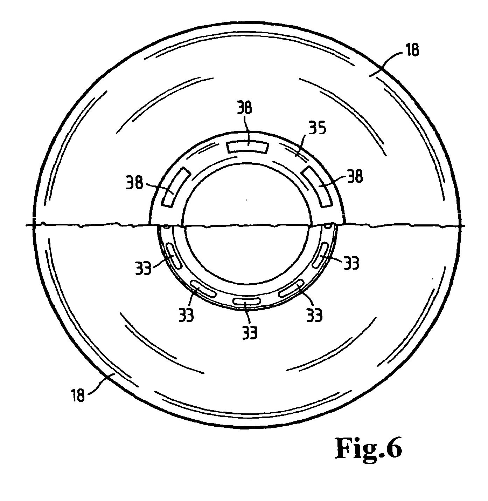

In dem oberen Halbschnitt der Figur 6 ist die Endscheibe 18 und der Haltering 35 in einer Draufsicht dargestellt. Der Figur 5 entsprechende Bauteile sind mit gleichen Bezugszeichen versehen. Der Haltering 35 verfügt über mehrere Durchtrittsöffnungen 38, welche als Fenster oder Bohrungen ausgestaltet sind. Im unteren Halbschnitt der Figur 5 ist die Endscheibe 18 ohne montierten Haltering 35 dargestellt. Hierbei ist zu erkennen, dass die Endscheibe 18 über mehrere Strömungskanäle 33 verfügt, welche gleichmäßig verteilt auf einem Kreis angeordnet sind. Die Lage und Größe der Strömungskanäle 33 und der Durchtrittsöffnungen 38 sind derart aufeinander abgestimmt, dass der Durchtritt der Luft von dem Strömungsquerschnitt 33 zu den Durchtrittsöffnungen 38 in jeder beliebigen Position des Halteringes 35 auf der Endscheibe 18 sichergestellt ist.

## Patentansprüche

1. Filterelement (17') in einem Kraftstofffilter, mit einem Filtermedium (20), das stirnseitig von einer Endscheibe (18) abgedichtet ist, und mit einer Entlüftungseinheit (25) zum Ableiten von Gasen aus dem geodätisch oberhalb der Endscheibe (18) liegenden Bereich, wobei die Entlüftungseinheit (25) mindestens einen Strömungskanal (33) in der Endscheibe (18) zwischen dem Rohbereich (23) und dem Reinbereich (24) des Filterelements (17') umfasst und der Strömungskanal (33) von einem Filterkörper (27') abgedeckt ist, **dadurch gekennzeichnet, dass** der Filterkörper (27') von einem Haltering (35) fixiert ist, welcher an der Endscheibe (18) zu befestigen ist, wobei in den Haltering (35) mindestens eine auf den Strömungskanal (33) abgestimmte Durchtrittsöffnung (38) eingebracht ist, und wobei die den zumindest einen Strömungskanal (33) aufweisende Endscheibe (18) eine mittige Durchtrittsöffnung zum Abströmen des gefilterten Kraftstoffs aufweist.

2. Filterelement nach Anspruch 1, **dadurch gekennzeichnet, dass** der Filterkörper (27') als Filterpapierring ausgestaltet ist.

3. Filterelement nach Anspruch 1, **dadurch gekennzeichnet, dass** der Filterkörper (27') aus einem keramischen Filterschaum besteht.

4. Filterelement nach einem der Ansprüche 1 bis 3, **dadurch gekennzeichnet, dass** der Filterkörper (27') aus dem gleichen Material wie das Filtermedium (20) besteht.

5. Filterelement nach einem der Ansprüche 1 bis 4, **dadurch gekennzeichnet, dass** eine Dichtung (37) vorgesehen ist, die an drei Seiten zwischen der Endscheibe (18), deren angeformtem Strömungskanal (33) und dem Haltering (35) gekammert ist.

6. Filterelement nach einem der Ansprüche 1 bis 3, **dadurch gekennzeichnet, dass** die Endscheibe (18) über mehrere Strömungskanäle (33) verfügt, die gleichmäßig verteilt auf einem Kreis angeordnet sind.

7. Filterelement nach Anspruch 6, **dadurch gekennzeichnet, dass** die Lage und Größe der Strömungskanäle (33) und der Durchtrittsöffnungen (38) aufeinander abgestimmt sind.

8. Filterelement nach einem der Ansprüche 1 bis 7, **dadurch gekennzeichnet, dass** der Haltering (35) ähnlich einer Überwurfmutter ausgestaltet und fest mit der Endscheibe (18) verbunden ist.

9. Filterelement nach einem der Ansprüche 1 bis 7, **dadurch gekennzeichnet, dass** der Haltering (35) mit der Endscheibe (18) verschnappt, verklebt oder verschweißt ist.

## Claims

1. Filter element (17') in a fuel filter, with a filter medium (20) which is sealed frontally by an end plate (18), and with a bleeding unit (25) for bleeding off gases from the area disposed geodetically above the end plate (18), the bleeding unit (25) comprising at least one flow channel (33) in the end plate (18) between the dirty area (23) and the clean area (24) of the filter element (17') and the flow channel (33) being covered by a filter body (27'), **characterized in that** the filter body (27') is fixed by a retaining ring (35) which is to be attached to the end plate (18), at least one lead-through opening (38) adapted to the flow channel (33) being realized in the retaining ring (35), and the end plate (18) with the at least one flow channel (33) featuring a central lead-through opening for discharging the filtered fuel.

2. Filter element according to claim 1, **characterized in that** the filter body (27') is designed as filter paper ring.

3. Filter element according to claim 1, **characterized in that** the filter body (27') is made of a ceramic filter foam.

4. Filter element according to one of the claims 1 to 3, **characterized in that** the filter body (27') is made of the same material as the filter medium (20).

5. Filter element according to one of the claims 1 to 4, **characterized in that** a sealing (37) is provided which is enclosed on three sides between the end plate (18), its integrally molded flow channel (33) and the retaining ring (35).

6. Filter element according to one of the claims 1 to 3, **characterized in that** the end plate (18) has several flow channels (33) which are evenly distributed on a circle.

7. Filter element according to claim 6, **characterized in that** the position and size of the flow channels (33) and the lead-through openings (38) are adapted to each other.

8. Filter element according to one of the claims 1 to 7, **characterized in that** the retaining ring (35) is designed like a union nut and firmly connected with the end plate (18).

9. Filter element according to one of the claims 1 to 7, **characterized in that** the retaining ring (35) is engaged, glued or welded with the end plate (18).

## Revendications

1. Élément filtrant (17') dans un filtre à carburant, doté d'un milieu filtrant (20) qui est étanché à l'avant par un disque d'extrémité (18), et d'une unité de purge (25) servant à évacuer des gaz de la zone située géodésiquement au-dessus du disque d'extrémité (18), l'unité de purge (25) comprenant au moins un canal d'écoulement (33) dans le disque d'extrémité (18) entre la zone brute (23) et la zone pure (24) de l'élément filtrant (17') et le canal d'écoulement (33) étant couvert par un corps de filtre (27'), **caractérisé en ce que** le corps de filtre (27') est fixé par une bague de retenue (35) qui doit être fixée au disque d'extrémité (18), une ouverture de passage (38) adaptée au canal d'écoulement (33) étant prévue dans la bague de retenue (35), et le disque d'extrémité (18) comportant le canal d'écoulement (33), au moins au nombre d'un, présentant une ouverture de passage centrale destinée à évacuer le carburant filtré.

2. Élément filtrant selon la revendication 1, **caractérisé en ce que** le corps de filtre (27') est réalisé comme bague en papier filtre.

3. Élément filtrant selon la revendication 1, **caractérisé en ce que** le corps de filtre (27') est constitué d'une mousse filtrante céramique.

4. Élément filtrant selon l'une des revendications 1 à 3, **caractérisé en ce que** le corps de filtre (27') est fait de la même matière que le milieu filtrant (20).

5. Élément filtrant selon l'une des revendications 1 à 4, **caractérisé en ce qu'**un joint (37) est prévu, lequel est encerclé sur trois côtés entre le disque d'extrémité (18), son canal d'écoulement moulé (33) et la bague de retenue (35).

6. Élément filtrant selon l'une des revendications 1 à 3, **caractérisé en ce que** le disque d'extrémité (18) dispose de plusieurs canaux d'écoulement (33) qui sont répartis de manière homogène sur un cercle.

7. Élément filtrant selon la revendication 6, **caractérisé en ce que** la position et la taille des canaux d'écoulement (33) et des ouvertures de passage (38) sont adaptées les unes aux autres.

8. Élément filtrant selon l'une des revendications 1 à 7, **caractérisé en ce que** la bague de retenue (35) est conçue comme un écrou chapeau et est fermement relié au disque d'extrémité (18).

9. Élément filtrant selon l'une des revendications 1 à 7, **caractérisé en ce que** la bague de retenue (35) est encliquetée, collée ou soudée au disque d'extrémité (18).
